# EUROPÄISCHE PATENTSCHRIFT

(11) **EP 2 549 156 B1**
(45) Veröffentlichungstag und Bekanntmachung des Hinweises auf die Patenterteilung: **24.12.2014**
(21) Anmeldenummer: 11005939.1
(22) Anmeldetag: 20.07.2011
(51) Int. Cl.: F16K 3/08, G05D 7/01

(54) **Ventiloberteil für Armaturen**
Valve top for fittings
Partie supérieure de soupape pour armatures

(43) Veröffentlichungstag der Anmeldung: 23.01.2013
(73) Patentinhaber: Flühs Drehtechnik GmbH, D-58515 Lüdenscheid (DE)
(72) Erfinder: Thurau, Friedrich, 58849 Herscheid (DE)
(74) Vertreter: Dörner, Kötter & Kollegen

(56) Entgegenhaltungen:
- EP-A1- 0 469 391
- EP-A1- 1 361 490
- WO-A1-97/32244
- DE-A1- 2 131 117
- DE-A1- 3 829 757
- DE-A1-102006 027 558
- DE-U1- 20 008 679
- DE-U1-202005 002 894

## Beschreibung

Die Erfindung betrifft ein Ventiloberteil für Armaturen gemäss den im Oberbegriff von Anspruch 1 definierten Merkmalen, wie es beispielsweise aus DE-A-1 0 2006 027 558 bekannt ist.

Mit Hilfe von Ventiloberteilen wird der Austritt von Fluiden aus Armaturen gesteuert. Für diesen Zweck wird das Ventiloberteil mittels seines Kopfstücks in das Gehäuse einer Armatur geschraubt; auf seine Spindel wird ein Drehgriff oder Hebel gesteckt. Bei bekannten Ventiloberteilen (vgl. DE 202 03 228 U1) sind zwei Schreiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine feste Ventilsitzscheibe. Bei Drehung der Steuerscheibe gleiten die Scheiben aneinander. Auf der dem Ventilsitz der Armatur zugewandten Seite ist eine Dichtung in Art einer Lippendichtung angeordnet, die an der Einlassscheibe anliegt. Die Dichtung überragt die Stirnfläche des Ventiloberteils und dient der Abdichtung sowohl zur Einlassscheibe als auch zum Ventilsitz der Armatur.

Eine weitere Ausführung eines Ventiloberteils ist in der DE 20 30 47 96 U1 beschrieben. Bei diesem Ventil ist eine dreh- und schwenkbar gelagerte Spindel vorgesehen, mit deren Hilfe die Steuerung des Durchflusses erfolgt. Die Spindel weist eine Kugel auf, mit deren Hilfe die Spindel in den Kopfstück schwenkbar ist. Unmittelbar im Anschluss weist die Spindel einen weiteren kugelförmigen Teil auf, mit dem die Spindel in einem mit der Steuerscheibe in Verbindung stehenden Mitnehmer greift. Durch verschwenken der Spindel wird die Steuerscheibe relativ zur feststehenden Einlassscheibe bewegt. Auch hier ist auf der dem Ventilsitz der Armatur zugewandten Seite eine Lippendichtung angeordnet, welche der Abdichtung sowohl zur Einlassscheibe als auch zum Ventilsitz der Armatur dient.

Insbesondere im Bereich der haushaltsnahen Wasserarmaturen wird zunehmend zur Reduzierung des Wasserverbrauchs die Anordnung eines Durchflussbegrenzers gewünscht, der einen kontinuierlichen Wasservolumenstrom ermöglicht. Dabei weisen die vorbekannten Ventiloberteile den Nachteil auf, dass je nach anliegendem Fluiddruck eine Verformung der Lippendichtung eintreten kann, wodurch die Dichtwirkung dieser Lippendichtung beeinträchtigt werden kann.

Hier will die Erfindung Abhilfe schaffen. Der vorliegenden Erfindung liegt die Aufgabe zugrunde, ein Ventiloberteil der vorgenannten Art bereitzustellen, bei dem ein konstanter Volumenstrom gewährleistet ist, wobei eine Verformung der Lippendichtung verhindert ist. Gemäß der Erfindung wird diese Aufgabe durch ein Ventiloberteil wie in Anspruch 1 definiert, gelöst.

Mit der Erfindung ist ein Ventiloberteil der vorgenannten Art geschaffen, bei dem ein konstanter Volumenstrom ermöglicht ist, wobei eine unerwünschte Verformung der Lippendichtung vermieden ist.

Erfindungsgemäss ist der Durchflussbegrenzer aus einem ringförmigen Steg gebildet, der an einem becherförmigen Durchflussteil angeordnet ist, in dem axial verlaufende Durchflusskanäle angeordnet sind, deren wirksamer Querschnitt über ein elastisches Element in Abhängigkeit vom anliegenden Fluiddruck veränderbar ist. Der ringförmige Steg ist in die Lippendichtung einführbar und hält diese radial in ihrer Position. Das becherförmige Durchflussteil ermöglicht durch die Wechselwirkung zwischen den axial verlaufenden Durchflusskanälen mit dem elastischen Element eine variable Beschränkung des wirksamen Querschnitts der Durchflusskanäle. Wird das elastische Element mit Druck beaufschlagt, so weitet dieses sich in den Bereich der Druchflusskanäle aus, wodurch diese teilweise verengt werden, wodurch deren wirksamer Querschnitt verkleinert wird.

In Ausgestaltung der Erfindung ist in dem Durchflussteil zentrisch ein innerer Zylinder angeordnet, der einen Ringkanal begrenzt, in dem die Durchflusskanäle münden, wobei in dem Ringkanal ein elastischer Ring angeordnet ist. Hierdurch ist durch Druckbeaufschlagung des elastischen Rings eine gleichmäßige Veränderung des wirksamen Querschnitts der in den Ringkanal mündenden Durchflusskanäle ermöglicht.

Bevorzugt sind an dem inneren Zylinder endseitig beabstandet zueinander winkelig nach außen gerichtete Arme angeformt. Hierdurch ist der elastische Ring innerhalb des Ringkanals axial gehalten.

In Weiterbildung der Erfindung weisen die Durchflusskanäle einen dreieckförmigen Querschnitt auf. Dabei liegt eine Spitze des Dreiecks bevorzugt auf einer radial durch den Mittelpunkt des inneren Zylinders verlaufenden Linie. Hierdurch wird bei geringer druckindizierter Verbreiterung des elastischen Rings eine relativ große Änderung des wirksamen Querschnitts der Durchflusskanäle ermöglicht. Vorteilhaft sind die Durchflusskanäle in gleichmäßigen Abständen um den Ringkanal angeordnet.

In weiterer Ausgestaltung der Erfindung ist das becherförmige Durchflussteil derart an dem ringförmigen Steg angeordnet, dass dessen Bodenfläche auf einer Ebene mit der dem Durchflussteil entgegen gerichteten Fläche des ringförmigen Steges angeordnet ist. Hierdurch ist der Einsatz des Durchflussbegrenzers bei fensterseitiger Fluidzuführung in Richtung des Ventilsitzes ermöglicht.

In alternativer Ausgestaltung der Erfindung ist das becherförmige Durchflussteil an seinem offenen Ende an dem ringförmigen Steg angeordnet. In dieser Ausgestaltung ist der Durchflussbegrenzer bei Einsatz des Ventiloberteils mit ventilsitzseitiger Fluideinströmung einsetzbar.

Vorteilhaft ist der Durchflussbegrenzer mit Ausnahme des elastischen Elements einstückig, vorzugsweise als Kunststoffspritzgussteil ausgebildet. Hierdurch ist eine kostengünstige Massenfertigung ermöglicht.

Alternativ kann das Durchflussteil über eine formschlüssige Verbindung an dem ringförmigen Steg befestigt sein, beispielsweise über eine an der Außenwandung des Durchflussteils angeordnete Nut, in welcher der ringförmige Steg einrastbar ist. Durch Anordnung von zwei Nuten an dem Durchflussteil ist somit je nach Positionierung des ringförmigen Steges der Druchflussbegrenzer zum Einsatz des Ventiloberteils für eine fensterseitige oder eine ventilsitzseitige Fluideinströmung konfigurierbar.

Ein Ausführungsbeispiel der Erfindung ist in den Zeichnungen dargestellt und wird nachfolgend im Einzelnen beschrieben. Es zeigen:

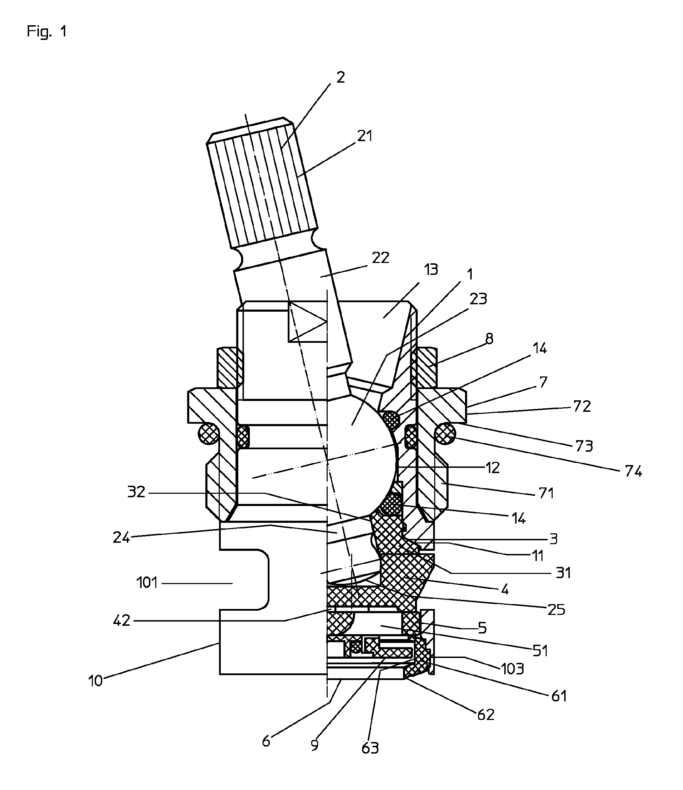

- Figur 1: die Darstellung eines Ventiloberteils in axialem Teilschnitt;

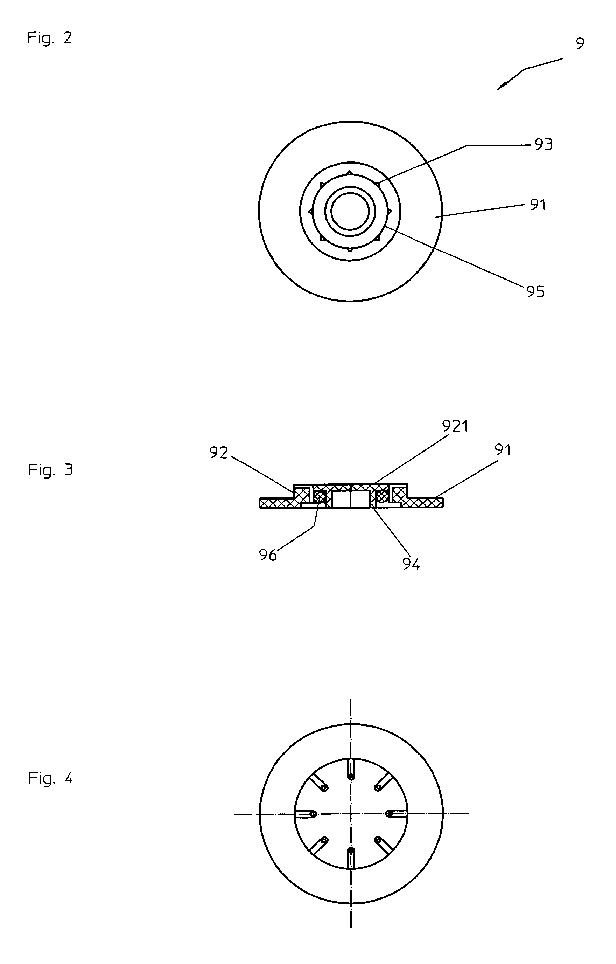

- Figur 2: die Darstellung des Durchflussbegrenzers des Ventiloberteils aus Figur 1 in der Ansicht von unten;
- Figur 3: die Darstellung des Durchflussbegrenzers aus Figur 2 im Querschnitt und
- Figur 4: die Darstellung des Durchflussbegrenzers aus Figur 2 in der Draufsicht.

Das als Ausführungsbeispiel gewählte Ventiloberteil weist ein Kopfstück 1 auf, das von einer in ihm radial geführten Spindel 2 mittig durchsetzt ist. Die Spindel 2 ist über eine drehfeste Scheibenführung 3 geführt und mit einer Steuerscheibe 4 formschlüssig verbunden, welche wiederum in der Scheibenführung 3 geführt ist. Die Steuerscheibe 4 steht mit einer Einlassscheibe 5 in Berührung, die in dem Kopfstück 1 gehalten ist und auf ihrer der Steuerscheibe 4 abgewandten Seite mit einer Dichtung 6 in Berührung steht, die einen Durchflussbegrenzer 9 aufnimmt.

Um das Kopfstück 1 ist mittig eine Überwurfhülse 7 angeordnet, die auf ihrer der Dichtung 6 zugewandten Seite mit einer Kontermutter 8 fixiert ist.

Das Kopfstück 1 besteht aus einem symmetrischen Hohlkörper, dessen beide Stirnflächen offen sind. Auf seiner der - nicht dargestellten - Armatur zugewandten Seite weist das Kopfstück 1 einen hülsenartigen Teil 10 auf. An dem freien Ende des hülsenartigen Teils 10 weist das Kopfstück 1 einen zentralen Zulauf auf. In dem hülsenartigen Teil 10 ist ein Durchtrittsfenster 101 vorgesehen. In Abwandlung des Ausführungsbeispiels können auch mehrere Durchtrittsfenster 101 vorgesehen sein, die dann von Längsstegen begrenzt sind. Innen ist in dem hülsenartigen Teil 10 eine Nut 103 zur Aufnahme der Lippendichtung 6 eingebracht.

Auf seiner der Armatur abgewandten Seite ist im Anschluss an das Fenster 101 der Innendurchmesser des Kopfstücks 1 abgesetzt und mit geringerem Durchmesser weitergeführt. Der hierdurch gebildete Absatz ist als Fase 11 ausgeführt. Dem Verlauf des Kopfstücks weiter folgend schließt sich eine Durchmesserverjüngung in Form eines Kugelabschnitts 12 an. Der Kugelabschnitt 12 mündet in einer Bohrung 13 des Kopfstücks 1, durch welche die Spindel 2 geführt ist. Die Bohrung 13 ist als Langlochbohrung ausgeführt. Beidseitig des Kugelabschnittes 12 sind O-Ringe 14 zur Abdichtung der Spindel 2 gegenüber dem Kopfstück 1 angeordnet.

Die Spindel 2 ist im Wesentlichen massiv ausgeführt. Sie ist an ihrer der Armatur abgewandten Stirnseite außen als Außenvielkant 21 ausgeführt, der zur Aufnahme eines - nicht dargestellten - Dreh- und Schwenkgriffs dient. Anschließend ist außen an der Spindel 2 eine Zylinderfläche 22 vorgesehen, mit der die Spindel 2 die Bohrung 13 durchsetzt und hierdurch einen Anschlag erfährt. An die Zylinderfläche 22 schließt sich ein kugelförmiger Abschnitt 23 an, an den sich eine weitere Zylinderfläche 24 anschließt. Das Spindelende 25 ist kugelförmig ausgebildet. Der kugelförmige Abschnitt 23 korrespondiert mit dem Kugelabschnitt 12 des Kopfstücks 1.

Die Scheibenführung 3 besteht im Wesentlichen aus einem zylindrischen Grundkörper 31, in den entlang seiner Rotationsachse eine Spindelführung 32 eingebracht ist, die in Form eines Langlochs ausgeführt ist. Die Länge des Langlochs nimmt entlang der Rotationsachse des zylindrischen Grundkörpers in Richtung des Spindelendes 25 des Spindels 2 zu; die Spindelführung 32 ist folglich im Wesentlichen kegelförmig ausgebildet.

Die Steuerscheibe 4 weist eine im Wesentlichen elliptische Außenkontur auf, die an ihren Längsenden orthogonal zur Längsmittelachse gekürzt ist, wodurch zwei zueinander parallele Seitenflächen hervorgerufen sind. In die Steuerscheibe 4 ist mittig eine Sacklochbohrung eingebracht, deren Durchmesser etwas größer ist, als der Durchmesser des kugelförmigen Endstücks 25 der Spindel 2. In montiertem Zustand greift das Endstück 25 in die Sacklochbohrung ein. Auf der der Sacklochbohrung gegenüberliegenden Seite der Steuerscheibe 4 ist eine Vertiefung 42 eingebracht.

Die Einlassscheibe 5 weist auf ihrem Umfang zwei sich diametral gegenüberliegende - nicht dargestellte - Führungsnasen auf, welche in - nicht dargestellte - Führungsnuten des hülsenförmigen Teils 10 des Kopfstücks 1 einfassen. Die Einlassscheibe 5 ist damit drehfest in dem Kopfstück 1 angeordnet. In der Scheibe 5 ist eine Durchtrittsöffnung 51 eingebracht, die eine angenähert sichelförmige Kontur aufweist. Wird die Spindel 2 innerhalb der Spindelführung 32 geschwenkt, so wird die Steuerscheibe 4 radial auf der Einlassscheibe 5 bewegt, wodurch die Durchtrittsöffnung 51 der Einlassscheibe 5 freigegeben beziehungsweise verschlossen wird.

Der Dichtring 6 ist nach Art einer Lippendichtung ausgebildet. Außen weist die Lippendichtung einen Bund 61 auf, der in die Nut 103 des hülsenartigen Teils 10 des Kopfstücks 1 greift. Die beiden gegenüberliegend angeordneten Lippen 62 liegen an der Einlassscheibe 5 beziehungsweise in montiertem Zustand der Armatur plan auf dem Ventilsitz der Armatur auf. Innen weist die Lippendichtung 6 umlaufend eine Nut 63 zur Aufnahme des ringförmigen Steges 91 des Durchflussbegrenzers 9 auf.

Die Überwurfhülse 7 weist ein Gewindestück 71 auf, an das sich ein Außensechskant 72 anschließt. Zwischen Gewindestück 71 und Außensechskant 72 ist eine Dichtungsnut 73 zur Aufnahme eines O-Rings 74 vorgesehen. Der O-Ring 74 dichtet das Ventiloberteil, welches mit Hilfe der Überwurfmutter 7 mit der Armatur verschraubt ist, gegen diese ab,

Der Durchflussbegrenzer 9 ist im Ausführungsbeispiel als einstückiges Kunststoffspritzgießteil ausgebildet. Er besteht im Wesentlichen aus einem ringförmigen Steg 91, an den ein becherförmiges Durchflussteil 92 angeformt ist. Mittig ist in dem Durchflussteil 92 ein innerer Zylinder 94 angeformt, der einen Ringkanal 95 begrenzt. Umlaufend des Ringkanals 95 sind in diesen mündend acht Durchflusskanäle 93 mit dreieckförmigen Querschnitt angeordnet. In dem Ringkanal 95 ist ein elastischer Ring 96 eingebracht, der über - nicht dargestellte - an dem inneren Zylinder 94 angeformte Arme in dem Ringkanal 95 axial fixiert ist. Im Ausführungsbeispiel ist das Ventiloberteil derart ausgebildet, dass der Zufluss des Fluids aus Richtung des Ventilsitzes erfolgt, welches aus den Durchtrittsfenstern 101 des hülsenartigen Teils 10 des Kopfstücks 10 des Kopfstücks 1 austritt. In dieser Ausführungsform ist das becherförmige Durchflussteil 92 an seinem offenen Ende an dem ringförmigen Steg 91 angeformt. Die Bodenfläche 921 des becherförmigen Durchflussteils 92 ist parallel zum ringförmigen Steg 91 ausgerichtet. In dem Fall, das der Zufluss des Fluids durch die Durchtrittsfenster 101 des Kopfstücks 1 erfolgt, ist eine alternative Ausführungsform des Durchflussbegrenzers 9 erforderlich. Hierbei ist das becherförmige Durchflussteil 92 derart an dem ringförmigen Steg 91 angeformt, dass dessen Bodenfläche 921 auf einer Ebene mit der dem Durchflussteil 92 entgegengerichteten Fläche des ringförmigen Steges 91 angeordnet ist.

In beiden Ausführungsformen wird der elastische Ring 96 in den Durchflusskanal 93 bei ansteigendem Fluiddruck zusammengedrückt, wobei sich dessen Breite erhöht. Hierdurch werden die Durchflusskanäle 93 teilweise verschlossen, wodurch trotz steigendem Fluiddruck der Volumenstrom konstant gehalten wird. Bei nachlassendem Druck bildet sich die Verformung des elastischen Rings 96 zurück und die Durchflusskanäle 93 werden wieder freigegeben.

## Patentansprüche

1. Ventiloberteil für Armaturen, mit einem Kopfstück (1), das von einer Spindel (2) mittig durchsetzt ist, über die ein Ventilkörper betätigbar ist, an dem eine Dichtvorrichtung angeordnet ist, über die der Ventilkörper mit dem Ventilsitz eines Armaturengehäuses zur Anlage kommt, welche Dichtvorrichtung einen Dichtring (6) umfasst, der als Lippendichtung ausgeführt ist, wobei die Lippendichtung (6) über ein Stützelement in ihrer Position gehalten ist, **dadurch gekennzeichnet, dass** das Stützelement als Durchflussbegrenzer (9) ausgebildet ist, wobei der Durchflussbegrenzer (9) aus einem ringförmigen Steg (91) gebildet ist, der an einem becherförmigen Durchflussteil (92) angeordnet ist, in dem axial verlaufende Durchflusskanäle (93) angeordnet sind, deren wirksamer Querschnitt über ein elastisches Element (96) in Abhängigkeit vom anliegenden Fluiddruck veränderbar ist.

2. Ventiloberteil nach Anspruch 1, **dadurch gekennzeichnet, dass** in dem Durchflussteil (92) zentrisch ein innerer Zylinder (94) angeordnet ist, der einen Ringkanal (95) begrenzt, in dem die Durchflusskanäle (93) münden, wobei in dem Ringkanal (95) das elastische Element in Form eines Rings (96) angeordnet ist.

3. Ventiloberteil nach Anspruch 2, **dadurch gekennzeichnet, dass** an dem inneren Zylinder (94) endseitig beabstandet zueinander winklig nach außen gerichtete Arme angeformt sind.

4. Ventiloberteil nach einem der Ansprüche 1 bis 3, **dadurch gekennzeichnet, dass** die Durchflusskanäle (93) einen dreieckförmigen Querschnitt aufweisen.

5. Ventiloberteil nach einem der Ansprüche 2 bis 4, **dadurch gekennzeichnet, dass** die Durchflusskanäle (93) in gleichmäßigen Abständen um den Ringkanal (95) angeordnet sind.

6. Ventiloberteil nach einem der Ansprüche 1 bis 5, **dadurch gekennzeichnet, dass** das becherförmige Durchflussteil (92) derart an dem ringförmigen Steg (91) angeordnet ist, dass dessen Bodenfläche (921) auf einer Ebene mit der dem Durchflussteil (92) entgegen gerichteten Fläche des ringförmigen Steges (91) angeordnet ist.

7. Ventiloberteil nach einem der Ansprüche 1 bis 5, **dadurch gekennzeichnet, dass** das becherförmige Durchflussteil (92) an seinem offenen Ende an dem ringförmigen Steg (91) angeordnet ist.

8. Ventiloberteil nach einem der vorgenannten Ansprüche, **dadurch gekennzeichnet, dass** der Durchflussbegrenzer (9) mit Ausnahme des elastischen Elements einstückig, vorzugsweise als Kunststoffspritzgussteil ausgebildet ist.

9. Ventiloberteil nach einem der Ansprüche 1 bis 7, **dadurch gekennzeichnet, dass** das Durchflussteil (92) formschlüssig mit dem ringförmigen Steg (91) verbunden ist.

10. Ventiloberteil nach Anspruch 9, **dadurch gekennzeichnet, dass** an dem Durchflussteil (92) außen zwei umlaufende Nuten angebracht sind, in welche der ringförmige Steg (91) jeweils einrastbar ist, derart, dass das Durchflussteil entweder mit seiner Bodenfläche (921) auf einer Ebene mit der dem Durchflussteil (92) entgegen gerichteten Fläche des ringförmigen Steges (91) oder an seinem offenen Ende an dem ringförmigen Steg (91) angeordnet ist.

## Claims

1. Valve top for fittings with a head part (1) through the centre which a spindle (2) passes by means of which a valve body can be activated, on which a sealing device is arranged, by means of which which the valve body rests against the valve seat of a fitting housing, which sealing device has a sealing ring (6) in the form of a lip seal, where the lip seal (6) is held in position by a supporting element, **characterised in that** the supporting element is formed as a flow limiter (9), where the flow limiter (9) is formed by a ring-shaped web (91) which is arranged on a cup-shaped flow part (92) in which axial shaped through-flow ducts (93) are arranged, whose effective cross section can be varied by means of an elastic element (96) according to the fluid pressure being exerted on it.

2. Valve top in accordance with claim 1, **characterised in that** an inner cylinder (94) is arranged centrally in the flow part (92), which inner cylinder delimits a ring duct (95) into which the through-flow ducts (93) run, where the elastic element in the shape of a ring (96) is arranged in the ring duct (95).

3. Valve top in accordance with claim 2, **characterised in that** arms are formed on the inner cylinder (94) which point outwards at an angle and whose ends are at a distance from one another.

4. Valve top in accordance with any of the claims 1 to 3, **characterised in that** the flow ducts (93) have a triangular cross section.

5. Valve top in accordance with any of the claims 2 to 4, **characterised in that** the flow ducts (93) are arranged at even distances around the ring duct (95).

6. Valve top in accordance with any of the claims 1 to 5, **characterised in that** the cup-shaped flow part (92) is arranged on the ring-shaped web (91) in such a way that its bottom surface (921) is located at the same level as the surface of the ring-shaped web (91) pointing towards the flow part (92).

7. Valve top in accordance with any of the claims 1 to 5, **characterised in that** the open end of the cup-shaped flow part (92) is arranged on the ring-shaped web (91).

8. Valve top in accordance with any of the claims, **characterised in that** the flow limiter (9), with the exception of the elastic element, is formed in one single part, preferably as a plastic injection moulding.

9. Valve top in accordance with any of the claims 1 to 7, **characterised in that** the flow part (92) is joined positively to the ring-shaped web (91).

10. Valve top in accordance with claim 9, **characterised in that** two circumferential grooves are formed on the outside of the flow part (92), into either of which the ring-shaped web (91) can engage, in such a way that the flow part is arranged either with its bottom surface (921) at the same level as the surface of the ring-shaped web (91) pointing towards the flow part (92) or with its open end on the ring-shaped web (91).

## Revendications

1. Partie supérieure de soupape pour armatures, comprenant une pièce têtière (1) traversée en son centre par une broche (2) qui permet d'actionner un corps de soupape contre lequel est agencé un dispositif d'étanchéité qui permet au corps de soupape de venir appliquer contre le siège de soupape d'un carter d'armature, lequel dispositif d'étanchéité comprend une bague d'étanchéité (6) réalisée sous forme de joint à lèvres, sachant que le joint à lèvres (6) est maintenu dans sa position via un élément d'appui, **caractérisé en ce que** l'élément d'appui est configuré en limiteur de débit (9), sachant que le limiteur de débit (9) est formé par une nervure (91) annulaire agencée contre une pièce de passage (92) en forme de gobelet dans laquelle sont agencées des lumières de passage (93) au tracé axial et dont la section efficace est modifiable via un élément élastique (96) en fonction de la pression du fluide en présence.

2. Partie supérieure de soupape selon la revendication 1, **caractérisée en ce qu'**au centre dans la pièce de passage (92) est agencé un cylindre intérieur (94) limitant un canal annulaire (95) dans lequel débouchent les lumières de passage (93), sachant que dans le canal annulaire (95) l'élément élastique est agencé en forme de bague (96).

3. Partie supérieure de soupape selon la revendication 2, **caractérisée en ce que** contre l'extrémité du cylindre intérieur (94) sont moulés, rapportés et mutuellement distants, des bras orientés selon un angle vers l'extérieur.

4. Partie supérieure de soupape selon l'une des revendications 1 à 3, **caractérisée en ce que** les lumières de passage (93) présentent une section triangulaire.

5. Partie supérieure de soupape selon l'une des revendications 2 à 4, **caractérisée en ce que** les lumières de passage (93) sont agencées équidistantes sur le canal annulaire (95).

6. Partie supérieure de soupape selon l'une des revendications 1 à 5, **caractérisée en ce que** la pièce de passage (92) en forme de gobelet est agencée contre la nervure annulaire (91) de sorte que la surface de son fond (921) est agencée sur un plan avec la surface, orientée en sens opposé à la pièce de passage (92), de la nervure annulaire (91).

7. Partie supérieure de soupape selon l'une des revendications 1 à 5, **caractérisée en ce que** l'extrémité ouverte de la pièces de passage (92) en forme de gobelet est agencée contre la nervure annulaire (91).

8. Partie supérieure de soupape selon l'une des revendications précédentes, **caractérisée en ce que** le limiteur de débit (9) est configuré monobloc, à l'exception de l'élément élastique, de préférence sous forme de pièce en matière plastique injectée.

9. Partie supérieure de soupape selon l'une des revendications 1 à 7, **caractérisée en ce que** la pièce de passage (92) est reliée par adhérence de formes à la nervure annulaire (91).

10. Partie supérieure de soupape selon la revendication 9, **caractérisée en ce que** deux rainures périphériques ont été ménagées contre la partie extérieure de la pièce de passage (92), dans lesquelles la nervure annulaire (91) peut respectivement encranter, de sorte que soit la surface du fond (921) de la pièce de passage est agencée sur un plan avec la surface, orientée en sens opposé à la pièce de passage (92), de la rainure annulaire (91), soit son extrémité ouverte est agencée contre la nervure annulaire (91).
